# FASCICULE DE BREVET EUROPEEN

(11) **EP 1 214 528 B1**
(45) Date de publication et mention de la délivrance du brevet: **24.11.2004**
(21) Numéro de dépôt: 00960793.8
(22) Date de dépôt: 05.09.2000
(51) Int. Cl.: F16D 21/04, F16H 3/083

(54) **BOITE DE VITESSES A CLAVETAGE**
ZIEHKEILSCHALTGETRIEBE
GEARBOX WITH COTTERING

(30) Priorité: 06.09.1999 FR 9911123
(43) Date de publication de la demande: 19.06.2002
(73) Titulaire: Peugeot Citroen Automobiles SA, 92200 Neuilly sur Seine (FR)
(72) Inventeur: PELLETIER, Laurent, F-95310 Saint-Ouen l'Aumône (FR); LELASSEUX, Xavier, F-92150 Suresnes (FR)
(74) Mandataire: Bentz, Jean-Paul
(86) Numéro de dépôt international: PCT/FR2000/002440
(87) Numéro de publication internationale: WO 2001/018417

(56) Documents cités:
- US-A- 2 861 461
- ULM M., LACHER F., GRAF F.: "Die elektrinische Getriebesteuerung 2000 - Markt und technische Trends" VDI BERICHTE 1170, 1994, XP000863302 cité dans la demande

## Description

La présente invention concerne une boîte de vitesses du type de celles dans lesquelles les changements de rapports sont obtenus par déplacement d'un sélecteur, ou tige de clavetage, propre à solidariser en rotation un arbre creux avec l'un des pignons d'une série de pignons montés fous sur cet arbre, voir par exemple US-A-2 861 461.

Plus précisément, la présente invention concerne une boîte de vitesses, comprenant au moins : un arbre primaire et un arbre secondaire, l'un de ces arbres formant un premier arbre creux percé d'un alésage axial; au moins deux paires de pignons, dont chacune comprend un pignon primaire et un pignon secondaire qui engrènent l'un avec l'autre et qui équipent respectivement les arbres primaire et secondaire; une première tige de clavetage montée mobile dans l'alésage axial du premier arbre creux et adoptant sélectivement au moins une première ou une deuxième position axiale; et un premier jeu de billes comprenant au moins des première et deuxième rangées de billes; les pignons primaires et secondaires présentant entre eux, pour deux paires différentes de pignons, des rapports respectifs différents l'un de l'autre, les première et deuxième paires de pignons incluant respectivement des premier et deuxième pignons libres, montés tourillonnants sur le premier arbre creux, et dont chacun présente des cannelures internes, le premier arbre creux présentant des première et deuxième rangées d'orifices débouchant respectivement en regard des cannelures des premier et deuxième pignons libres, et dans lesquels sont respectivement engagées les billes des première et deuxième rangées, et la première tige de clavetage présentant un bossage radial engageant sélectivement les billes de la première ou de la deuxième rangée dans les cannelures du premier ou du deuxième pignon libre, selon que la première tige est dans sa première ou sa deuxième position axiale.

Une boîte de vitesses de ce type est par exemple décrite dans le document : Ulm M., Lacher F., Graf F., "Die elktronische Getriebesteuerung 2000 - Markt und technische Trends", VDI Berichte 1170, 1994.

En dépit des avantages qu'apporte notamment leur simplicité, les boîtes de vitesses connues de ce type ne sont pas assez fiables pour être utilisées sur les véhicules automobiles à conduite intérieure, leur application étant donc limitée aux véhicules motorisés à deux roues, de puissance relativement faible.

Dans ce contexte, la présente invention a pour but de proposer une boîte de vitesses de structure simple, mais présentant néanmoins une fiabilité compatible avec son application aux véhicules à quatre roues.

A cette fin, la boîte de vitesses de l'invention, par ailleurs conforme à la définition générique qu'en donne le préambule ci-dessus, est essentiellement caractérisée en ce qu'elle comprend au moins une première cage fixe en rotation par rapport au premier arbre creux et disposée entre le premier arbre creux et les premier et deuxième pignons libres, en ce que cette première cage est formée de segments empilés suivant une direction axiale et définissant entre eux un ensemble d'interstices comprenant au moins un premier et un second interstices en regard desquels sont respectivement disposées les billes des première et deuxième rangées, en ce que les segments sont montés coulissants suivant la direction axiale pour permettre à chacun des premier et second interstices d'adopter sélectivement une largeur minimale pour laquelle ces premier et second interstices interdisent respectivement aux billes des première et seconde rangées de s'engager respectivement dans les cannelures des premier et deuxième pignons libres, et une largeur maximale pour laquelle ces premier et second interstices autorisent respectivement les billes des première et seconde rangées à s'engager respectivement dans les cannelures des premier et deuxième pignons libres, et en ce que les segments sont montés coulissants avec un débattement total effectif inférieur au double de la différence entre les largeurs maximale et minimale, ce dont il résulte que deux interstices différents n'adoptent jamais leur largeur maximale en même temps.

Grâce à un tel agencement, la boîte de vitesses de l'invention se trouve protégée contre le risque que des billes puissent sortir de leur logement sous l'effet de la force centrifuge.

Selon un mode de réalisation possible de l'invention, les segments de cage sont par exemple enserrés, suivant la direction axiale, entre deux ressorts précontraints.

De préférence, les première et deuxième paires de pignons incluent respectivement des premier et deuxième pignons liés, engrenant respectivement avec les premier et second pignons libres, et solidaires en rotation de celui des arbres primaire et secondaire qui n'est pas formé par le premier arbre creux.

Dans le cas où l'arbre primaire forme un premier arbre creux, l'arbre secondaire peut former un second arbre creux et porter lui-même au moins deux pignons libres, ce second arbre creux étant percé d'un alésage axial dans lequel sont logés une deuxième tige de clavetage, un deuxième jeu de billes, et une deuxième cage respectivement homologues de la première tige de clavetage, du premier jeu de billes, et de la première cage.

Pour augmenter de façon économique le nombre de vitesses, le premier arbre creux peut porter des pignons liés, solidaires en rotation de ce premier arbre creux.

Dans le cas où la boîte de vitesses comprend au moins trois paires de pignons, et doit permettre la sélection directe d'une vitesse à partir d'une vitesse non adjacente, il peut être opportun de prévoir que les différentes rangées de billes du premier jeu de billes au moins comprennent un même nombre déterminé de billes, que le bossage radial de la première tige de clavetage au moins soit traversé par des encoches axiales en nombre égal au nombre déterminé de billes et dont chacune forme un logement pour une bille, que la première tige de clavetage soit liée en rotation, par des cannelures axiales, à un manchon de commande de phase sélectivement mobile suivant la direction axiale, et que le manchon de commande de phase soit lui-même lié en rotation au premier arbre creux par une liaison hélicoïdale.

Il peut alors en outre être opportun de prévoir que les orifices pratiqués dans le premier arbre creux au moins soient disposés en quinconce.

Pour doter la boîte de vitesses d'une marche arrière, une des paires de pignons peut comprendre un pignon primaire et un pignon secondaire qui n'engrènent l'un avec l'autre que par l'intermédiaire d'un troisième pignon, porté par un axe supplémentaire par rapport aux axes primaire et secondaire.

Le rendement de la boîte de vitesses de l'invention peut être optimisé en prévoyant que les pignons libres portés par un même arbre soient séparés les uns des autres par des butées à aiguilles.

Enfin, dans un mode de réalisation simple de la boîte de vitesses de l'invention, les segments de la première cage sont par exemple indexés en rotation les uns sur les autres au moyen de découpes et de languettes complémentaires engagées dans ces découpes.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe partielle d'une boîte de vitesses conforme à un premier mode de réalisation de l'invention;
- la figure 2 est une vue en coupe partielle d'un détail d'une boîte de vitesses conforme à l'invention;
- la figure 3 est une vue en perspective éclatée d'une cage utilisable dans une boîte de vitesses conforme à l'invention;
- la figure 4a est une vue en perspective de l'extérieur d'une cage utilisable dans une boîte de vitesses conforme à l'invention et représentée dans une première configuration;
- la figure 4b est une vue en perspective semblable à la figure 4a, mais dans laquelle la cage est représentée dans une seconde configuration;
- la figure 5 est une vue en coupe axiale d'un pignon libre utilisable dans une boîte de vitesses conforme à l'invention;
- la figure 6 est une vue de face du pignon libre illustré à la figure 5;
- la figure 7 est une vue en coupe partielle d'une boîte de vitesses conforme à un second mode de réalisation de l'invention;
- la figure 8a est une vue en perspective partielle d'une première variante d'exécution possible d'une tige de clavetage utilisable dans la boîte de vitesses de l'invention;
- la figure 8b est une vue en perspective partielle d'une seconde variante d'exécution possible d'une tige de clavetage utilisable dans la boîte de vitesses de l'invention;
- la figure 9a est une vue en coupe partielle d'une option de commande d'une tige de clavetage suivant la variante d'exécution illustrée à la figure 8b, utilisée dans l'arbre primaire d'une boîte de vitesses conforme à l'invention;
- la figure 9b est une vue en coupe partielle d'une option de commande d'une tige de clavetage suivant la variante d'exécution illustrée à la figure 8b, utilisée dans l'arbre secondaire d'une boîte de vitesses conforme à l'invention;
- la figure 10 est une vue en coupe partielle d'une boîte de vitesses conforme à un troisième mode de réalisation de l'invention; et
- la figure 11 est une vue en coupe partielle d'une boîte de vitesses conforme à un quatrième mode de réalisation de l'invention, représentée en position de blocage pour le stationnement du véhicule.

L'invention concerne de façon générale une boîte de vitesses dont la figure 10 donne un exemple relativement simple et complet, bien qu'illustrant également des caractéristiques tout à fait optionnelles.

Une telle boîte comprend classiquement un dispositif, prenant ici la forme d'un embrayage E, assurant son couplage avec le moteur, un arbre primaire 1 qui reçoit le couple moteur en provenance du dispositif de couplage E et qui porte une série de pignons primaires 31, 32, 33, un arbre secondaire 2 qui porte d'une part une série de pignons secondaires 41, 42, 43, dont l'un au plus, à chaque instant, est entraîné par un pignon primaire correspondant, en l'occurrence par le pignon 31, et d'autre part un pignon de sortie 49 engrenant avec le pignon 99 d'entraînement du pont P de transmission du véhicule.

Chacun des arbres est, de façon classique, monté sur des paliers fixés à un carter C.

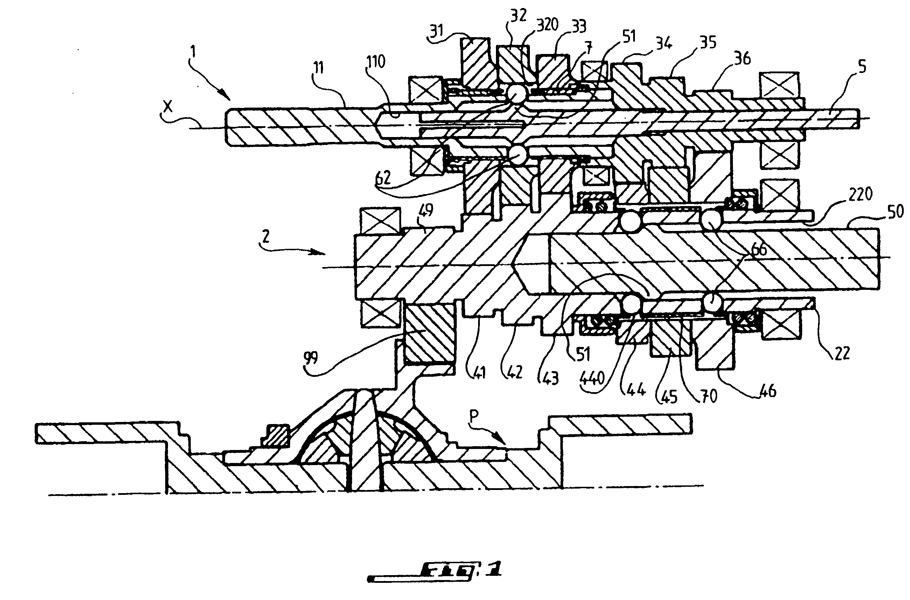

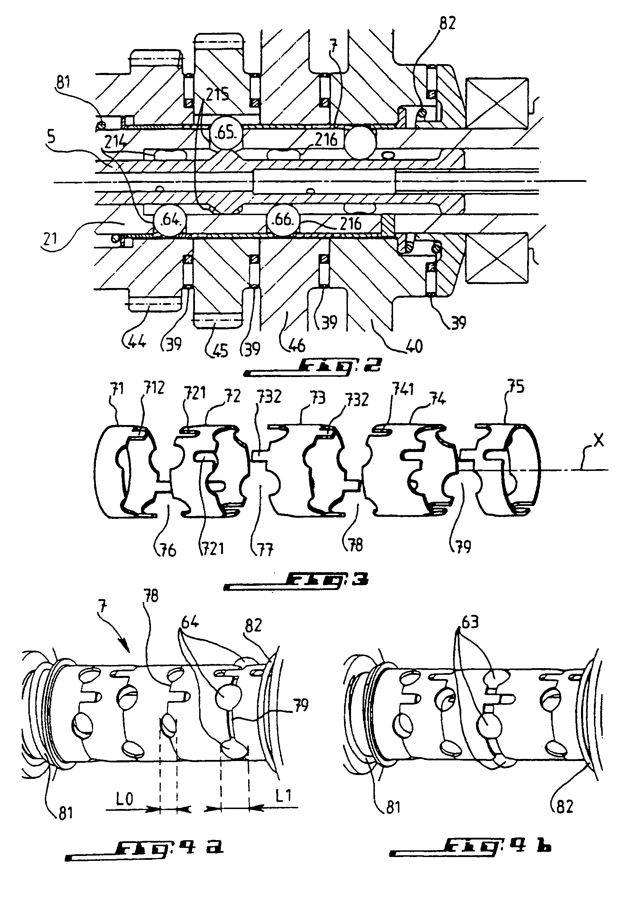

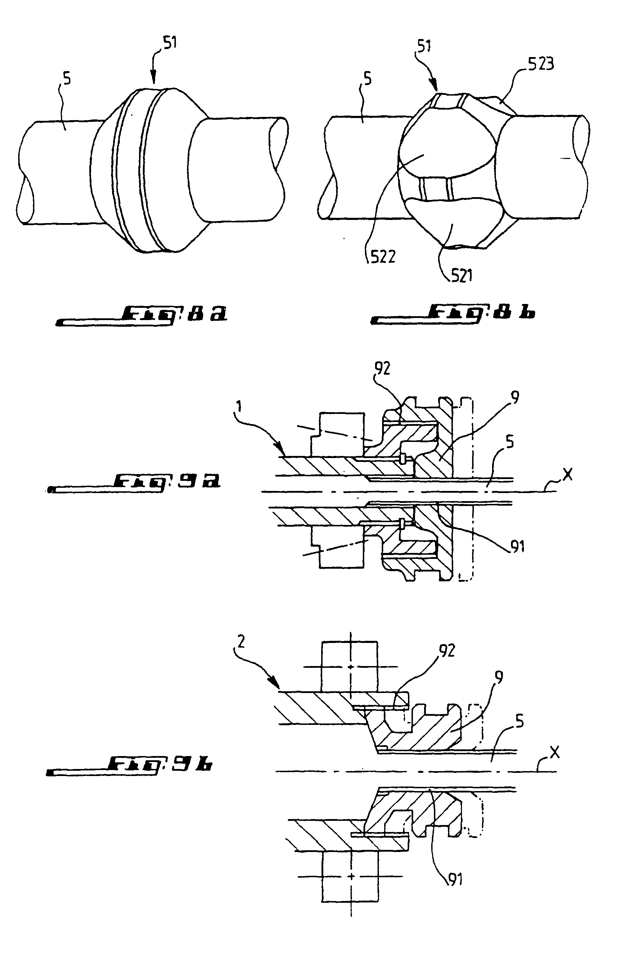

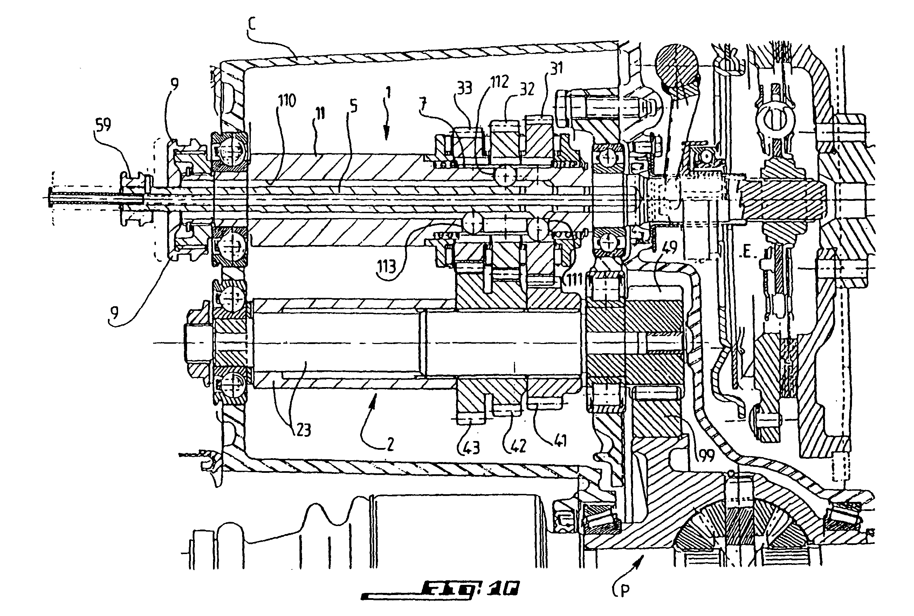

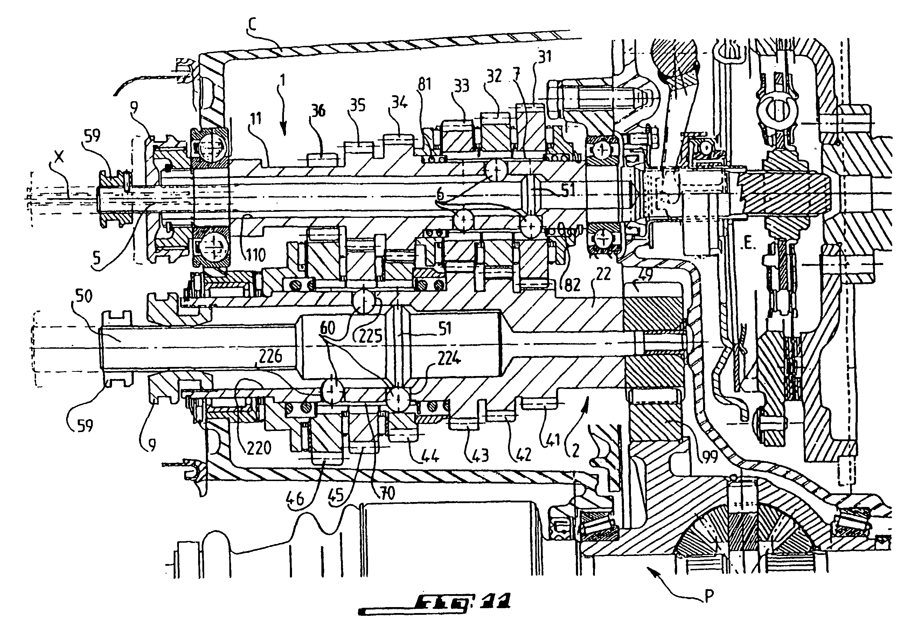

L'un des arbres primaire 1 et secondaire 2 constitue un premier arbre creux, percé d'un alésage axial tel que 110 (figures 1, 10, 11) ou 210 (figures 2 et 7).

Par convention, le premier arbre creux sera considéré comme constitué par l'arbre primaire 1, et désigné par la référence 11 (figures 1, 10, 11), lorsque cet arbre primaire comprendra toutes les caractéristiques définissant ce premier arbre creux et ne sera donc pas constitué, par exemple, par un arbre plein tel que l'arbre 13 de la figure 7, l'arbre secondaire 2 pouvant alors lui-même soit constituer un second arbre creux 22 réalisé conformément à l'enseignement de l'invention (figures 1 et 11), soit constituer un arbre quelconque, tel que l'arbre plein 23 de la figure 10.

En revanche, le premier arbre creux sera considéré comme constitué par l'arbre secondaire 2 et désigné par la référence 21 (figures 2 et 7) lorsque cet arbre secondaire comprendra toutes les caractéristiques définissant ce premier arbre creux, alors que l'arbre primaire 1 est réalisé différemment, comme par exemple l'arbre 13 de la figure 7.

La boîte de vitesses comprend par ailleurs une pluralité de paires de pignons, telles que 31, 41 à 33, 43 (figure 10), 34, 44 à 36, 46 (figure 7), ou 31, 41 à 36, 46 (figures 1 et 11), chaque paire de pignons comprenant un pignon primaire, tel que 31 à 36, et un pignon secondaire, tel que 41 à 46, et les pignons primaire et secondaire d'une même paire engrenant l'un avec l'autre et équipant respectivement les arbres primaire 1 et secondaire 2.

A chaque paire de pignons engrenés correspond un rapport, représenté par le rapport du nombre de dents du pignon primaire au nombre de dents du pignon secondaire correspondant, les paires de pignons engrenés étant étagées de manière que deux paires différentes de pignons présentent des rapports respectifs différents l'un de l'autre, et que les rapports des différentes paires évoluent de façon monotone suivant la direction axiale X du premier arbre creux 11, 21.

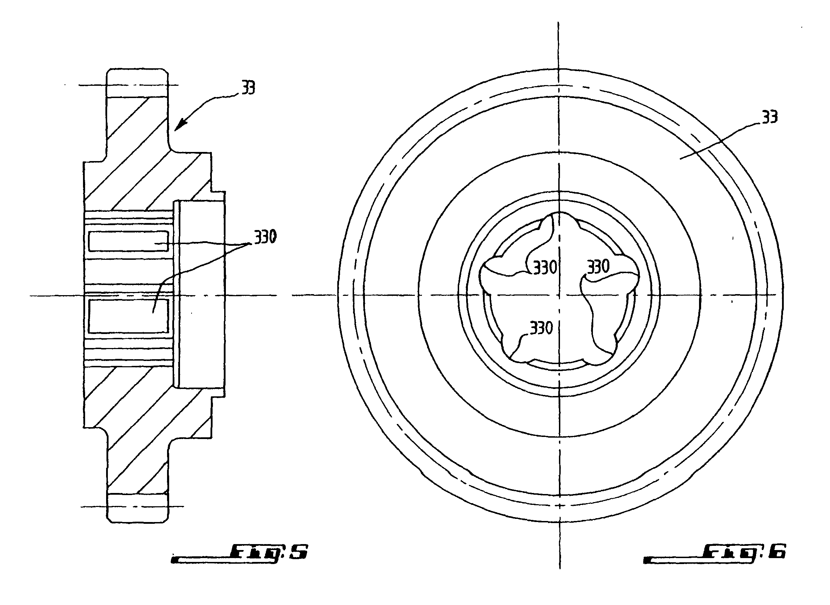

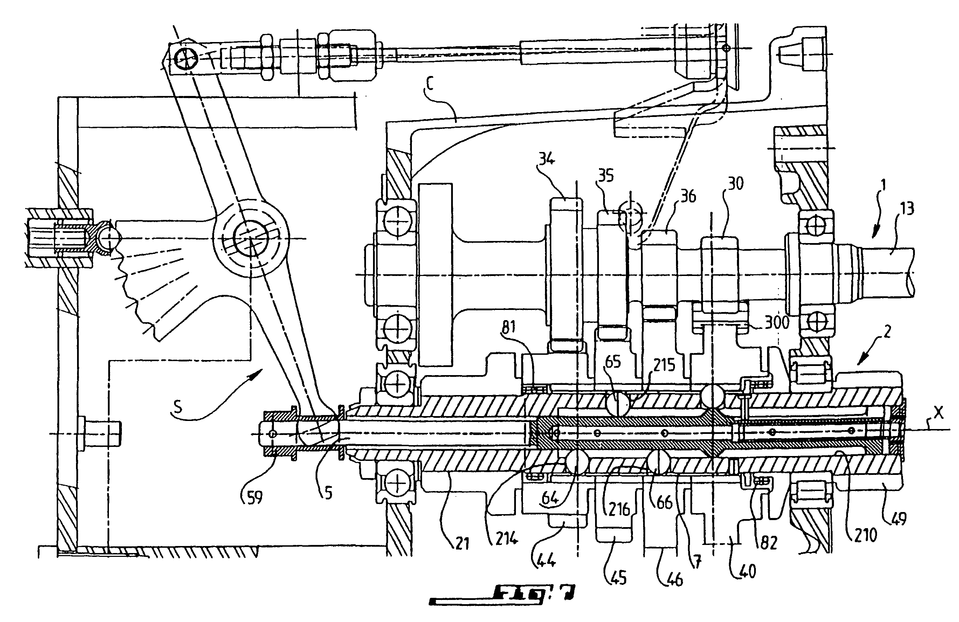

Par ailleurs, chacune des paires de pignons engrenés comprend un pignon libre, tel que 31 à 33 et 44 à 46, monté tourillonnant sur le premier arbre creux 11, 21 ou sur le second arbre creux 22 (figure 7) et présentant des cannelures internes correspondantes 310 à 330 (figures 5 et 6) et 440 à 460, l'autre pignon de chaque paire étant constitué par un pignon lié, tel que 34 à 36 et 41 à 43, solidaire en rotation de l'arbre qui le porte.

Une tige de clavetage telle que 5 ou 50, dotée d'un bossage radial 51, est montée mobile dans l'alésage axial 110, 210, ou 220 de chaque arbre creux 11, 21, ou 22 pour pouvoir, en réponse à une commande de changement de vitesse, passer d'une première position axiale à une seconde position axiale.

Chaque tige de clavetage 5, 50, est par exemple commandée en translation dans l'arbre creux correspondant par un mécanisme de sélection tel que S (figure 7), qui manoeuvre un manchon de commande de translation 59 solidaire de cette tige.

Chaque arbre creux 11, 21, 22 est percé d'une pluralité d'orifices radiaux tels que 111 à 113 (figure 10), 214 à 216 (figure 7), 224 à 226 (figure 11), disposés en rangées telles que 62 ( figure 1) et 64 à 66 (figure 2), les orifices de chaque rangée débouchant en regard des cannelures internes d'un même pignon libre, tel que 31 à 33 et 44 à 46.

Chaque arbre creux 11, 21, 22 comprend un jeu de billes, tel que 6 et 60 (figure 11), chaque bille étant logée dans l'un des orifices radiaux de cet arbre, et les billes d'un même jeu étant donc disposées en rangées comme le sont ces orifices radiaux.

Grâce à la mobilité axiale de chaque tige de clavetage 5, 50, le bossage radial 51 de cette tige peut être amené en face de l'une quelconque des rangées de billes logées dans l'arbre creux correspondant, auquel cas les billes de cette rangée sont poussées par le bossage radial 51 dans les orifices radiaux de cette rangée, jusqu'à se trouver engagées à la fois dans ces orifices et dans les cannelures internes du pignon libre disposé en regard de cette rangée, ce mouvement assurant le clavetage de ce pignon sur l'arbre creux et rendant ainsi ce pignon temporairement fixe en rotation par rapport à cet arbre.

La boîte de vitesses selon l'invention comprend par ailleurs, dans chaque arbre creux tel que 11, 21 ou 22, une cage telle que 7 ou 70, qui est fixe en rotation par rapport à cet arbre et qui est disposée entre ce même arbre et les pignons libres qu'il porte.

Chaque cage 7, 70 (figure 3, 4a, 4b) est formée de segments, tels que 71 à 75, empilés suivant la direction axiale X de l'arbre creux correspondant, ces segments définissant entre eux un ensemble d'interstices, tels que 76 à 79, dont chacun accueille l'une des rangées de billes, ces segments présentant de préférence des embrèvements arrondis formant, par paires, des logements pour les billes comme illustré sur les figures 4a et 4b.

Les segments 71 à 75 sont montés coulissants suivant la direction axiale X pour permettre à chacun des interstices 76 à 79, d'adopter, à volonté, soit une largeur minimale L0 (figure 4a), par exemple mesurée au niveau des embrèvements arrondis, pour laquelle cet interstice interdit aux billes de la rangée correspondante de s'engager dans les cannelures du pignon libre correspondant, soit une largeur maximale L1 pour laquelle cet interstice autorise les billes de cette rangée à s'engager dans les cannelures du pignon libre correspondant.

Les segments 71 à 75 sont montés coulissants avec un débattement total effectif tel que deux interstices différents 76 à 79 n'adoptent jamais leur largeur maximale L1 en même temps.

Par "débattement total effectif", on entend ici la distance axiale totale maximale que peuvent en pratique parcourir les segments extrêmes 71 et 75 l'un par rapport à l'autre, cette distance devant être inférieure à celle qui serait nécessaire pour que deux rangées de billes, telles que 64 sur la figure 4a, et 63 sur la figure 4b, puissent, en même temps, faire saillie dans les cannelures internes respectives de deux pignons libres différents, montés sur un même arbre creux.

Telles que sont définies les largeurs maximale L1 et minimale L0, ce débattement doit donc être au moins égal à la différence L1-L0, mais inférieur à la quantité 2 x (L1-L0), c'est-à-dire au double de la différence entre les largeurs maximale et minimale.

Bien qu'une solution possible consiste à simplement limiter mécaniquement le débattement à cet intervalle de valeurs, il peut être plus avantageux de prévoir que les segments de cage 71 à 75 soient enserrés, suivant la direction axiale X, entre deux ressorts précontraints 81, 82, le débattement étant ainsi limité par les efforts de compression axiale exercés sur l'empilement de segments, et qui empêchent qu'une bille puisse restée engagée dans la cannelure d'un pignon alors qu'elle n'est pas poussée radialement par le bossage 51 de la tige de clavetage 5 ou 50.

Comme il est dit précédemment, chacune des cages 7, 70 est rendue solidaire en rotation de l'arbre creux qui la porte.

A cette fin, chaque segment 71 à 75 et l'arbre creux correspondant peuvent présenter une rainure axiale et une nervure complémentaire coopérant l'une avec l'autre.

Selon une autre variante, illustrée la figure 3 notamment, il est possible de faire en sorte que seuls les segments extrêmes 71 et 75 soient solidaires en rotation de l'arbre qui les porte, et que les différents segments composant la cage 7 soient indexés en rotation les uns sur les autres au moyen de découpes telles que 721, 741 et de languettes complémentaires 712, 732, engagées dans ces découpes 721, 741.

Comme le montre également la figure 3, les embrèvements arrondis de la cage, qui forment logements pour les billes, ainsi que les orifices radiaux tels que 214, 215, 216 (figure 2) pratiqués dans l'arbre creux correspondant peuvent être disposés en quinconce, non seulement pour optimiser l'équilibrage de cet arbre, mais également pour rendre plus aisés les moyens à mettre en oeuvre, qui seront décrits ci-dessous, pour permettre un passage non séquentiel des vitesses.

Lorsque les arbres primaire et secondaire 1 et 2 constituent des premier et second arbres creux respectifs, chacun d'eux, comme le montrent les figures 1 et 11, porte de préférence à la fois des pignons libres et des pignons liés, les pignons libres 31, 32, 33 et 44, 45, 46 portés par un même arbre 11, 21 étant en outre avantageusement séparés les uns des autres par des butées à aiguilles 39 pour augmenter le rendement de la boîte de vitesses dans tous les modes de réalisation de l'invention.

Pour doter la boîte de vitesses de l'invention d'une marche arrière, il est possible de prévoir, comme le montre la figure 7, qu'une des paires 30, 40 de pignons comprenne un pignon primaire 30 et un pignon secondaire 40 dont l'un est libre et l'autre lié, ces pignons n'engrenant l'un avec l'autre que par l'intermédiaire d'un troisième pignon 300 porté par un arbre auxiliaire et permettant aux pignons primaire et secondaire de tourner dans le même sens.

La boîte telle que décrite jusqu'à présent peut utiliser une tige de clavetage dont le bossage radial 51 a la forme de deux troncs de cône assemblés par leur base et séparés par une surface sensiblement cylindrique, telle qu'illustrée à la figure 8a.

Il peut cependant être opportun de prévoir la possibilité, dans la boîte de vitesses de l'invention, de passer des vitesses de façon non séquentielle, et par exemple la possibilité de passer de la troisième vitesse à la première sans avoir à enclencher la deuxième vitesse, cette possibilité étant offerte par la mise en oeuvre de moyens tels que ceux qu'illustrent les figures 8b, 9a et 9b.

Dans ce cas, les différentes rangées de billes telles que 61 à 63 comportent toutes un même nombre N de billes, ce nombre étant par exemple égal à cinq, et le bossage radial 51 de la tige de clavetage 5 ou 50 correspondante est traversé par des encoches axiales, telles que 521, 522, 523, en nombre égal au nombre de billes et disposées de la même façon, chacune de ces encoches formant un logement pour la bille qui lui correspond.

Sous réserve que la tige de clavetage soit convenablement orientée autour de son axe longitudinal X, le bossage radial 51 peut ainsi traverser le plan transversal dans lequel sont disposées les billes d'une même rangée sans qu'intervienne le moindre déplacement radial de ces billes, qui roulent dans le fond des encoches axiales telles que 521, 522, et 523.

Pour assurer une orientation correcte de la tige de clavetage 5 ou 50 autour de son axe longitudinal X, cette tige doit d'une part être synchronisée en rotation avec l'arbre creux qui la porte, et doit d'autre part pouvoir subir par rapport à cet arbre un décalage angulaire, autrement dit un déphasage, égal à 36 degrés dans le cas où les rangées de billes comprennent cinq billes, permettant au bossage radial 51 de déplacer radialement, ou non, les billes de la rangée de billes qu'il rencontre dans la position axiale qu'adopte la tige de clavetage.

Les moyens permettant cette synchronisation et ce déphasage sont illustrés à la figure 9a dans le cas où l'arbre creux est l'arbre primaire 1, et à la figure 9b dans le cas où l'arbre creux est l'arbre secondaire 2, ces deux cas ne se distinguant l'un de l'autre que par le fait que l'arbre primaire présente un diamètre inférieur à celui de l'arbre secondaire, et peut obliger à prévoir un montage différent.

Quel que soit le montage adopté, la tige de clavetage 5, 50 comporte par exemple, en plus de son manchon de commande de translation 59 (figure 7), un manchon de commande de phase 9 auquel cette tige est liée en rotation par des cannelures axiales 91, c'est-à-dire des cannelures orientées suivant l'axe X.

Par ailleurs, le manchon de commande de phase 9, qui peut lui-même être commandé pour adopter deux positions différentes suivant la direction axiale X comme indiqué en traits pleins et en traits mixtes sur la figure 9b, est lié en rotation à l'arbre creux correspondant par une liaison hélicoïdale 92.

Dans ces conditions, le manchon 9 solidarise en rotation la tige 5 ou 50 à l'arbre creux correspondant, tout en étant capable, par son déplacement axial, d'introduire un décalage angulaire de cette tige par rapport à l'arbre qui la porte, et donc par rapport aux billes logées dans cet arbre qui sont ainsi, ou non, déplacées radialement par le bossage 51 (figure 8b) de la tige de clavetage selon que le manchon 9 est dans sa position en traits pleins (figures 9a et 9b) ou en traits mixtes.

## Revendications

1. Boîte de vitesses, comprenant au moins : un arbre primaire (1) et un arbre secondaire (2), l'un de ces arbres formant un premier arbre creux (11, 21) percé d'un alésage axial (110, 210); au moins deux paires (31, 41 à 36, 46) de pignons, dont chacune comprend un pignon primaire (31 à 36) et un pignon secondaire (41 à 46) qui engrènent l'un avec l'autre et qui équipent respectivement les arbres primaire (1) et secondaire (2); une première tige de clavetage (5) montée mobile dans l'alésage axial (110, 210) du premier arbre creux (11, 21) et adoptant sélectivement au moins une première ou une deuxième position axiale; et un premier jeu de billes (6) comprenant au moins des première et deuxième rangées de billes (61 à 64); les pignons primaires et secondaires (31 à 36; 41 à 46) présentant entre eux, pour deux paires différentes de pignons, des rapports respectifs différents l'un de l'autre, les première et deuxième paires de pignons (31, 41 et 32, 42; 34, 44 et 35, 45) incluant respectivement des premier et deuxième pignons libres (31, 32; 44, 45), montés tourillonnants sur le premier arbre creux (11, 21), et dont chacun présente des cannelures internes (310, 320; 440, 450), le premier arbre creux (11, 21) présentant des première et deuxième rangées d'orifices (111, 112; 211, 212) débouchant respectivement en regard des cannelures (310, 440; 320, 450) des premier et deuxième pignons libres (31, 44; 32, 45), et dans lesquels sont respectivement engagées les billes des première et deuxième rangées (61, 62), et la première tige de clavetage (5) présentant un bossage radial (51) engageant sélectivement les billes de la première ou de la deuxième rangée (61, 62) dans les cannelures du premier ou du deuxième pignon libre (31, 44; 32, 45), selon que la première tige (5) est dans sa première ou sa deuxième position axiale, **caractérisée en ce qu'**elle comprend au moins une première cage (7) fixe en rotation par rapport au premier arbre creux (11, 21) et disposée entre le premier arbre creux (11, 21) et les premier et deuxième pignons libres (31, 44; 32, 45), **en ce que** cette première cage (7) est formée de segments (71 à 75) empilés suivant une direction axiale (X) et définissant entre eux un ensemble d'interstices (76 à 79) comprenant au moins un premier et un second interstices (76, 77) en regard desquels sont respectivement disposées les billes des première et deuxième rangées (61, 62), **en ce que** les segments (71 à 75) sont montés coulissants suivant la direction axiale (X) pour permettre à chacun des premier et second interstices (76, 77) d'adopter sélectivement une largeur minimale (L0) pour laquelle ces premier et second interstices (76, 77) interdisent respectivement aux billes des première et seconde rangées (61, 62) de s'engager respectivement dans les cannelures des premier et deuxième pignons libres (31, 44; 32, 45), et une largeur maximale (L1) pour laquelle ces premier et second interstices (76, 77) autorisent respectivement les billes des première et seconde rangées (61, 62) à s'engager respectivement dans les cannelures des premier et deuxième pignons libres (31, 44; 32, 45), et **en ce que** les segments (71 à 75) sont montés coulissants avec un débattement total effectif inférieur au double de la différence entre les largeurs maximale et minimale, ce dont il résulte que deux interstices différents (76 à 79) n'adoptent jamais leur largeur maximale (L1) en même temps.

2. Boîte de vitesses suivant la revendication 1, **caractérisée en ce que** les segments de cage (71 à 75) sont enserrés, suivant la direction axiale (X), entre deux ressorts précontraints (81, 82).

3. Boîte de vitesses suivant la revendication 1 ou 2, **caractérisée en ce que** les première et deuxième paires de pignons (31, 41 et 32, 42; 34, 44 et 35, 45) incluent respectivement des premier et deuxième pignons liés (41 et 42; 34 et 35), engrenant respectivement avec les premier et second pignons libres (31 et 32; 44 et 45), et solidaires en rotation de celui (13, 23, 22) des arbres primaire et secondaire (1, 2) qui n'est pas formé par le premier arbre creux (11, 21).

4. Boîte de vitesses suivant l'une quelconque des revendications précédentes, **caractérisée en ce que** l'arbre secondaire (2) forme un second arbre creux (22) et porte au moins deux pignons libres (44, 45), et **en ce que** ce second arbre creux (22) est percé d'un alésage axial (220) dans lequel sont logés une deuxième tige de clavetage (50), un deuxième jeu de billes (60), et une deuxième cage (70) respectivement homologues de la première tige de clavetage (5), du premier jeu de billes (6), et de la première cage (7).

5. Boîte de vitesses suivant la revendication 4, **caractérisée en ce que** le premier arbre creux (11, 21) porte des pignons liés (34, 35, 36; 41, 42, 43), solidaires en rotation de ce premier arbre creux (11, 21).

6. Boîte de vitesses suivant l'une quelconque des revendications précédentes, **caractérisée en ce qu'**elle comprend au moins trois paires (31, 41 à 33, 43) de pignons, **en ce que** les différentes rangées de billes (61 à 63) du premier jeu de billes (6) au moins comprennent un même nombre déterminé de billes (N), **en ce que** le bossage radial (51) de la première tige de clavetage (5) au moins est traversé par des encoches axiales (521, 522, 523) en nombre (N) égal au nombre déterminé de billes et dont chacune forme un logement pour une bille, **en ce que** la première tige de clavetage (5) est liée en rotation, par des cannelures axiales (91), à un manchon de commande de phase (9) sélectivement mobile suivant la direction axiale (X), et **en ce que** le manchon de commande de phase (9) est lié en rotation au premier arbre creux (11, 21) par une liaison hélicoïdale (92).

7. Boîte de vitesses suivant l'une quelconque des revendications précédentes, **caractérisée en ce qu'**une des paires (30, 40) de pignons comprend un pignon primaire (30) et un pignon secondaire (40) qui n'engrènent l'un avec l'autre que par l'intermédiaire d'un troisième pignon (300).

8. Boîte de vitesses suivant l'une quelconque des revendications précédentes, **caractérisée en ce que** les orifices (111, 112; 211, 212) pratiqués dans le premier arbre creux (11, 21) au moins sont disposés en quinconce.

9. Boîte de vitesses suivant l'une quelconque des revendications précédentes, **caractérisée en ce que** les pignons libres (31, 32, 33; 44, 45, 46) portés par un même arbre (11, 21) sont séparés les uns des autres par des butées à aiguilles (39).

10. Boîte de vitesses suivant l'une quelconque des revendications précédentes, **caractérisée en ce que** les segments (72, 73, 74) de la première cage (7) sont indexés en rotation les uns sur les autres au moyen de découpes (721, 741) et de languettes complémentaires (712, 732) engagées dans les découpes (721, 741).

## Patentansprüche

1. Schaltgetriebe, das zumindest enthält: eine Hauptwelle (1) und eine Nebenwelle (2), wobei eine dieser Wellen eine erste Hohlwelle (11, 21) bildet, die von einer axialen Bohrung (110, 210) durchsetzt ist; zumindest zwei Paar (31, 41 bis 36, 46) Zahnräder, von denen jedes Paar ein Hauptzahnrad (31 bis 36) und ein Nebenzahnrad (41 bis 46) enthält, die miteinander kämmen und mit denen die Hauptwelle (1) bzw. die Nebenwelle (2) ausgestattet ist; eine erste Ziehkeilwelle (5), die beweglich in der axialen Bohrung (110, 210) der ersten Hohlwelle (11, 21) gelagert ist und selektiv zumindest eine erste bzw. eine zweite axiale Stellung einnimmt; und einen ersten Satz Kugeln (6), der zumindest eine erste und eine zweite Reihe von Kugeln (61 bis 64) enthält; wobei bei zwei verschiedenen Paaren von Zahnrädern die Haupt- und Nebenzahnräder (31 bis 36; 41 bis 46) zwischen einander jeweilige, voneinander verschiedene Übersetzungsverhältnisse aufweisen, wobei das erste und das zweite Paar von Zahnrädern (31, 41 und 32, 42; 34, 44 und 35, 45) jeweils ein erstes und ein zweites loses Rad umfassen (31, 32; 44, 45), die auf der ersten Hohlwelle (11, 21) drehbar gelagert sind, und von denen jedes Innenriffelungen (310, 320; 440, 450) aufweist, wobei die erste Hohlwelle (11, 21) eine erste und eine zweite Reihe von Öffnungen (111, 112; 211, 212) aufweist, die jeweils den Riffelungen (310, 440; 320, 450) des ersten und des zweiten losen Rads (31, 44; 32, 45) gegenüberliegend ausmünden und in denen die jeweiligen Kugeln der ersten und der zweiten Reihe (61, 62) eingreifen, wobei die erste Ziehkeilwelle (5) eine radiale Erhebung (51) aufweist, die selektiv die Kugeln der ersten oder der zweiten Reihe (61, 62) in die Riffelungen des ersten oder des zweiten losen Rads (31, 44; 32, 45) einführt, je nachdem, ob die erste Ziehkeilwelle (5) sich in ihrer ersten oder in ihrer zweiten axialen Stellung befindet, **dadurch gekennzeichnet, dass** es zumindest einen ersten Käfig (7) enthält, der gegenüber der ersten Hohlwelle (11, 21) drehfest und zwischen der ersten Hohlwelle (11, 21) und dem ersten und zweiten losen Rad (31, 44; 32, 45) angeordnet ist, dass dieser erste Käfig (7) aus Segmenten (71 bis 75) gebildet ist, die in einer axialen Richtung (X) aufeinandergestapelt sind und zwischen sich eine Gruppe von Zwischenräumen (76 bis 79) definieren, die zumindest einen ersten und einen zweiten Zwischenraum (76, 77) enthält, denen gegenüberliegend die jeweiligen Kugeln der ersten und der zweiten Reihe (61, 62) angeordnet sind, und dass die Segmente (71 bis 75) in axialer Richtung (X) gleitbeweglich gelagert sind, um es sowohl dem ersten als auch dem zweiten Zwischenraum (76, 77) zu ermöglichen, selektiv eine Mindestbreite (L0) anzunehmen, bei welcher der erste und der zweite Zwischenraum (76, 77) die jeweiligen Kugeln der ersten und der zweiten Reihe (61, 62) daran hindern, in die jeweiligen Riffelungen des ersten und des zweiten losen Rads (31, 44; 32, 45) einzugreifen, sowie eine Höchstbreite (L1), bei welcher dieser erste und dieser zweite Zwischenraum (76, 77) es den jeweiligen Kugeln der ersten und der zweiten Reihe (61, 62) gestatten, in die jeweiligen Riffelungen des ersten und des zweiten losen Rads (31, 44; 32, 45) einzugreifen, und dass die Segmente (71 bis 75) mit einem effektiven Gesamtausschlag gleitbeweglich gelagert sind, der kleiner ist als die zweifache Differenz zwischen Höchst- und Mindestbreite, woraus sich ergibt, dass niemals zwei verschiedene Zwischenräume (76 bis 79) gleichzeitig ihre Höchstbreite (L1) annehmen.

2. Schaltgetriebe nach Anspruch 1, **dadurch gekennzeichnet, dass** die Käfigsegmente (71 bis 75) in axialer Richtung (X) zwischen zwei vorgespannten Federn (81, 82) eingespannt sind.

3. Schaltgetriebe nach Anspruch 1 oder 2, **dadurch gekennzeichnet, dass** das erste und das zweite Paar von Rädern (31, 41 und 32, 42; 34, 44 und 35, 45) jeweils ein erstes und ein zweites festes Rad (41 und 42; 34 und 35) umfassen, die mit dem ersten bzw. dem zweiten losen Rad (31 und 32; 44 und 45) kämmen und drehfest mit derjenigen Welle (13, 23, 22) der Haupt- und der Nebenwelle (1, 2) verbunden sind, die nicht von der ersten Hohlwelle (11, 21) gebildet wird.

4. Schaltgetriebe nach einem der vorangehenden Ansprüche, **dadurch gekennzeichnet, dass** die Nebenwelle (2) eine zweite Hohlwelle (22) bildet und zumindest zwei lose Räder (44, 45) trägt, und dass diese zweite Hohlwelle (22) von einer axialen Bohrung (220) durchsetzt wird, in der eine zweite Ziehkeilwelle (50), ein zweiter Satz von Kugeln (60) und ein zweiter Käfig (70) untergebracht sind, die identisch sind zur ersten Ziehkeilwelle (5), zum ersten Satz von Kugeln (6) bzw. zum ersten Käfig (7).

5. Schaltgetriebe nach Anspruch 4, **dadurch gekennzeichnet, dass** die erste Hohlwelle (11, 21) feste Räder (34, 35, 36; 41, 421, 43) trägt, die drehfest mit dieser ersten Hohlwelle (11, 21) verbunden sind.

6. Schaltgetriebe nach einem der vorangehenden Ansprüche, **dadurch gekennzeichnet, dass** es zumindest drei Paar (31, 41 bis 33, 43) von Zahnrädern enthält, dass die verschiedenen Kugelreihen (61 bis 63) zumindest des ersten Satzes von Kugeln (6) eine bestimmte, gleiche Anzahl von Kugeln (N) enthalten, dass die radiale Erhebung (51) zumindest der ersten Ziehkeilwelle (5) von axialen Einkerbungen (521, 522, 523) durchsetzt wird, deren Anzahl (N) gleich der bestimmten Anzahl von Kugeln ist und die jeweils eine Aufnahme für eine Kugel bilden, dass die erste Ziehkeilwelle (5) über axiale Riffelungen (91) drehfest mit einer Phasensteuermuffe (9) verbunden ist, die selektiv in axialer Richtung (X) verlagerbar ist, und dass die Phasensteuermuffe (9) über eine spiralförmige Verbindung (92) mit der ersten Hohlwelle (11, 21) drehfest verbunden ist.

7. Schaltgetriebe nach einem der vorangehenden Ansprüche, **dadurch gekennzeichnet, dass** eines der Räderpaare (30, 40) ein Hauptrad (30) und ein Nebenrad (40) enthält, die nur über ein drittes Rad (300) miteinander kämmen.

8. Schaltgetriebe nach einem der vorangehenden Ansprüche, **dadurch gekennzeichnet, dass** zumindest die in der ersten Hohlwelle (11, 21) ausgeführten Öffnungen (111, 112; 211, 212) auf Lücke angeordnet sind.

9. Schaltgetriebe nach einem der vorangehenden Ansprüche, **dadurch gekennzeichnet, dass** die von einer gleichen Welle (11, 21) getragenen losen Räder (31, 32, 33; 44, 45, 46) durch Zeigeranschläge (39) voneinander getrennt sind.

10. Schaltgetriebe nach einem der vorangehenden Ansprüche, **dadurch gekennzeichnet, dass** die Segmente (72, 73, 74) des ersten Käfigs (7) in Drehung aneinander durch Einschnitte (721, 741) und komplementäre Zungen (712, 732) indexiert sind, die in die Einschnitte (721, 741) eingreifen.

## Claims

1. Gearbox, comprising at least: a primary shaft (1) and a secondary shaft (2), one of these shafts forming a first hollow shaft (11, 21) perforated by an axial bore (110, 210); at least two pairs (31, 41 to 36, 46) of pinions, each of which comprises a primary pinion (31 to 36) and a secondary pinion (41 to 46) which intermesh and equip both the primary shaft (1) and secondary shaft (2); a first cottering rod (5) mounted displaceably in the axial bore (110, 210) of the first hollow shaft (11, 21), and selectively adopting at least a first or second axial position; and a first set of balls (6) comprising at least first and second rows of balls (61 to 64); the primary and secondary pinions (31 to 36; 41 to 46) exhibiting between them, for two different pairs of pinions, different respective ratios in relation to each other, the first and second pairs of pinions (31, 41 and 32, 42; 34, 44 and 35, 45) including first and second free pinions (31, 32; 44, 45) respectively, pivoted on the first hollow shaft (11, 21), one of which exhibits internal grooves (310, 320; 440, 450), the first hollow shaft (11, 21) exhibiting first and second rows of orifices (111, 112; 211, 212) opening opposite the grooves (310, 440; 320, 450) of the first and second free pinions (31, 44; 32, 45) respectively, and in which the balls of the first and second rows (61, 62) engage respectively, wherein the first cottering rod (5) exhibits a radial boss (51) selectively engages the balls of the first or second row (61, 62) in the grooves of the first or second free pinion (31, 44; 32, 45), depending on which the first rod (5) is in its first or second axial position, **characterised in that** it comprises at least a first cage (7) rotatably fixed in relation to the first hollow shaft (11, 21) and arranged between the first hollow shaft (11, 21) and the first and second free pinions (31, 44; 32, 45), **in that** this first cage (7) is formed of segments (71 to 75) stacked in an axial direction (X) and defining between them an assembly of interstices (76 to 79) comprising at least a first and second interstice (76, 77) opposite which are arranged the balls of the first and second rows (61, 62) respectively, **in that** the segments (71 to 75) are mounted so that they slide in the axial direction (X) to enable each of the first and second interstices (76, 77) to adopt selectively a minimum width (L0) for which these first and second interstices enable the balls of the first and second rows (61, 62) respectively to engage in the grooves of the first and second free pinions (31, 44; 32, 45) respectively, and **in that** the segments (71 to 75) are mounted so that they slide with a total effective clearance less than twice the difference between the maximum and minimum widths, with the result that two different interstices (76 to 79) never adopt their maximum width (L1) at the same time.

2. Gearbox according to claim 1, **characterised in that** the cage segments (71 to 75) are clamped, in the axial direction (X), between two pre-stressed springs (81, 82).

3. Gearbox according to claim 1 or 2, **characterised in that** the first and second pairs of pinions (31, 41 and 32, 42; 34, 44 and 35, 45) include first and second associated pinions (41 and 42; 45 an 35) respectively, engaging with the first and second free pinions (31 and 32; 44 and 45) respectively, rotatably integral with that (13, 23, 22) of the first and second shafts (1, 2) which is not formed by the first hollow shaft (11, 21).

4. Gearbox according to any of the preceding claims, **characterised in that** the secondary shaft (2) forms a second hollow shaft (22) and carries at least two free pinions (44, 45), and **in that** this second hollow shaft (22) is perforated by an axial bore (220) in which are housed a second cottering rod (50), a second set of balls (60) and a second cage (70) which are homologous to the first cottering rod (5), the first set of balls (6) and the first cage (7) respectively.

5. Gearbox according to claim 4, **characterised in that** the first hollow shaft (11, 21) carries associated pinions (34, 35, 36; 41, 42, 43) rotabably integral with this first hollow shaft (11, 21).

6. Gearbox according to any of the preceding claims, **characterised in that** it comprises at least three pairs (31, 41 to 33, 43) of pinions, **in that** the different rows of balls (61 to 63) of the first set of balls (6) comprise at least the same specific number of balls ()N), **in that** the radial boss (51) of the first cottering rod (5) is crossed at least by axial notches (521, 522, 523) in a number (N) equal to the specific number of balls, each of which forms a housing for one bal, **in that** the first cottering rod (5) is rotatably connected, by axial grooves (91), to a phase control sleeve (9) which is selectively displaceable in the axial direction (X), and **in that** the phase control sleeve (9) is rotatably connected to the first hollow shaft (11, 21) by a helical connection (92).

7. Gearbox according to any of the preceding claims, **characterised in that** one of the pairs (30, 40) of pinions comprises a primary pinion (30) and a secondary pinion (40) which only intermesh by means of a third pinion (300).

8. Gearbox according to any of the preceding claims, **characterised in that** the orifices (111, 112; 211, 212) made in the first hollow shaft (11, 21) exhibit at least a staggered arrangement.

9. Gearbox according to any of the preceding claims, **characterised in that** the free pinions (31, 32, 33; 44, 45, 46) carried by the same shaft (11, 21) are separated from the others by needle thrust bearings (39).

10. Gearbox according to any of the preceding claims, **characterised in that** the segments (72, 73, 74) of the first cage) are rotabably indexed to each other by means of cut-out sections (721, 741) and complementary tongues (712, 732) engaging in the cut-out sections (721, 741).
